# FASCICULE DE BREVET EUROPEEN

(11) **EP 2 829 780 B1**
(45) Date de publication et mention de la délivrance du brevet: **29.03.2017**
(21) Numéro de dépôt: 14177824.1
(22) Date de dépôt: 21.07.2014
(51) Int. Cl.: H02G 3/00

(54) **Console pour fournir un support horizontal à un objet tel qu'un chemin de câbles**
Konsole um einer Kabelrinne zu montieren
Console to provide an horizontal support to an object as a cable tray

(30) Priorité: 22.07.2013 FR 1357211
(43) Date de publication de la demande: 28.01.2015
(73) Titulaire: Legrand France, 87000 Limoges (FR); Legrand SNC, 87000 Limoges (FR)
(72) Inventeur: Bethoule, Julien, 72000 Le Mans (FR); Denis, Laurent, 72190 Sarge les Le Mans (FR)
(74) Mandataire: Santarelli

(56) Documents cités:
- EP-A1- 1 376 807
- EP-A1- 1 406 362
- US-A- 5 271 586
- US-A1- 2006 038 091

## Description

### DOMAINE DE L'INVENTION

L'invention a trait aux consoles pour fournir un support horizontal à un objet tel qu'un chemin de câbles.

### ARRIÈRE-PLAN TECHNOLOGIQUE

On connaît déjà, notamment par la demande de brevet français 2 785 340, une telle console formée par un élément métallique profilé présentant un fond et deux ailes latérales chacune raccordée par un côté longitudinal à un côté longitudinal respectif du fond, les ailes latérales étant en regard l'une de l'autre. Chaque aile latérale comporte une paroi latérale et un retour présentant un rebord, avec la paroi latérale qui s'étend entre le fond et le rebord, et avec le rebord qui est en débord externe de la paroi latérale. Cet élément métallique profilé comporte une première portion configurée pour former un support horizontal à un chemin de câbles, une deuxième portion configurée pour être fixée sur une structure telle qu'un mur, et un coude situé entre la première portion et la deuxième portion. Le fond de la première portion présente une série d'ouvertures pour permettre la fixation du chemin de câbles.

La demande de brevet français 2 785 340 décrit un organe de fixation spécifique comportant une patte recourbée pour s'engager avec le chemin de câbles, et plus précisément avec un fil que comporte ce chemin de câbles.

On connait également des consoles du même type, dans lesquelles la deuxième portion est prévue pour être fixée à un support tel qu'un plafond (et non un mur), le coude formant un demi-tour (et non un quart de tour), la deuxième portion étant disposée parallèlement (et non transversalement) à la première portion.

### OBJET DE L'INVENTION

L'invention vise à fournir une console semblable mais offrant des meilleures qualités d'aspect, tout en restant simple et économique.

L'invention propose à cet effet une console pour fournir un support horizontal à un objet tel qu'un chemin de câbles, comportant un élément métallique profilé présentant un fond et deux ailes latérales chacune raccordée par un côté longitudinal à un côté longitudinal respectif du fond, les ailes latérales étant en regard l'une de l'autre, chaque aile latérale comportant une paroi latérale et un retour présentant un rebord, avec la paroi latérale qui s'étend entre le fond et le rebord, lequel élément métallique profilé comporte une première portion configurée pour former ledit support horizontal, une deuxième portion configurée pour être fixée sur une structure telle qu'un mur ou un plafond, et un coude situé entre la première portion et la deuxième portion, le fond de la première portion présentant une série d'ouvertures ; caractérisée en ce que dans ledit élément métallique profilé, le rebord de chaque aile latérale est en regard du fond du côté interne de la paroi latérale tandis qu'au niveau dudit coude, ledit fond est convexe du côté des ailes latérales ; et en ce que la console comporte, en outre dudit élément métallique profilé, un accessoire de fixation configuré pour être inséré dans ladite deuxième portion de l'élément métallique profilé, lequel accessoire de fixation comporte une portion centrale configurée pour se loger entre lesdits retours, et deux portions latérales chacune configurée pour se loger entre ledit fond et l'un desdits retour, avec ladite portion centrale qui comporte une ouverture pour un organe de fixation sur ledit support tel qu'un mur ou un plafond.

Ainsi, le fond de la première portion est du côté de la deuxième portion, et par conséquent du côté de la structure telle qu'un plafond si la deuxième portion est prévue pour être fixée à une telle structure, et du côté tourné vers le haut si la deuxième portion est prévue pour être fixée à une structure telle qu'un mur et que cette deuxième portion est disposée classiquement au-dessus de la première portion.

Par conséquent, pour un éventuel observateur qui regarde depuis le bas, c'est-à-dire qui est situé sous la première portion de l'élément métallique profilé, les ouvertures de la première portion, et d'ailleurs les organes de fixation de l'objet tel qu'un chemin de câbles, seront peu visibles puisqu'elles seront masquées au moins par les retours de la première portion.

Au surplus, le fait que les retours soient du côté interne des parois latérales des ailes (ils sont en regard du fond) et non en débord externe des parois latérales, permet à l'élément métallique profilé d'être particulièrement compact.

L'élément métallique profilé de la console selon l'invention est donc relativement discret, ce qui est favorable à son aspect visuel.

La console offre l'avantage de permettre d'opérer la fixation de l'élément métallique profilé sur la structure telle qu'un plafond ou un mur de façon particulièrement discrète.

Selon des caractéristiques avantageuses, permettant notamment elles aussi d'opérer la fixation de l'élément métallique profilé sur la structure telle qu'un plafond ou un mur de façon particulièrement discrète :
- au moins une dite portion latérale dudit accessoire de fixation comporte un trou pour un organe de fixation entre ledit accessoire de fixation et ladite deuxième portion de l'élément métallique profilé ;
- ladite console comporte deux dits accessoires de fixation ;
- ladite deuxième portion de l'élément métallique profilé et chaque dit accessoire de fixation sont configurés pour qu'une âme centrale de chaque dit accessoire de fixation soit en débord dudit élément métallique profilé lorsque ledit accessoire de fixation est inséré dans ladite deuxième portion ; et/ou
- ledit accessoire de fixation comporte une âme centrale et deux gouttières latérales chacune raccordée par un côté longitudinal à un côté longitudinal respectif de l'âme centrale.

Selon d'autres caractéristiques avantageuses, permettant de masquer totalement les ouvertures de la première portion de l'élément métallique profilé et les organes de fixation de l'objet tel qu'un chemin de câbles :
- la console comporte, en outre dudit élément métallique profilé un bourrelet pour fermer l'espace existant entre lesdits retours ;
- ledit bourrelet comporte de chaque côté une première nervure pour se prendre sur une zone de jonction entre ledit rebord et un bord tombé dudit retour et une deuxième nervure pour se prendre sur la tranche située à une extrémité libre dudit bord tombé ; et/ou
- lorsque ledit bourrelet est en place sur ledit élément métallique profilé, une paroi dudit bourrelet situé entre lesdites premières nervures présente une surface externe à fleur de la surface externe desdits rebords.

Selon d'autres caractéristiques avantageuses, également favorables à la discrétion de la console selon l'invention, en combinant les caractéristiques avantageuses qui viennent d'être exposées, la console comporte, en outre dudit élément métallique profilé et dudit accessoire de fixation, un bourrelet pour fermer l'espace existant entre lesdits retours, engagé dans ladite première portion et dans ledit coude.

Selon d'autres caractéristiques avantageuses également favorables à la discrétion de la console selon l'invention :
- la console comporte en outre dudit élément métallique profilé, un embout engagé sur au moins une extrémité libre dudit élément métallique profilé ; et/ou
- ladite extrémité libre est l'extrémité de ladite première portion de l'élément métallique profilé qui est du côté opposé audit coude.

### BRÈVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ceux-ci :
- les figures 1 et 2 sont des vues en perspective d'une console selon l'invention, respectivement en vue éclatée et à l'état assemblé ;
- la figure 3 est une vue en perspective prise sous un autre angle de cette console à l'état assemblé ;
- la figure 4 est la vue en coupe repérée par IV-IV sur la figure 2 ;
- la figure 5 est une vue en perspective montrant la console selon l'invention et un chemin de câbles supporté par cette console ;
- la figure 6 est une vue en perspective semblable à la figure 2, mais pour une première variante de la console selon l'invention ;
- les figures 7 à 9 sont des vues semblables aux figures 1 à 3, mais pour une deuxième variante de la console selon l'invention ; et
- la figure 10 est une vue semblable à la figure 5, mais pour la deuxième variante de la console selon l'invention et deux chemins de câbles en fils plutôt qu'un chemin de câbles en tôle perforée.

### DESCRIPTION DÉTAILLÉE D'EXEMPLES DE RÉALISATION

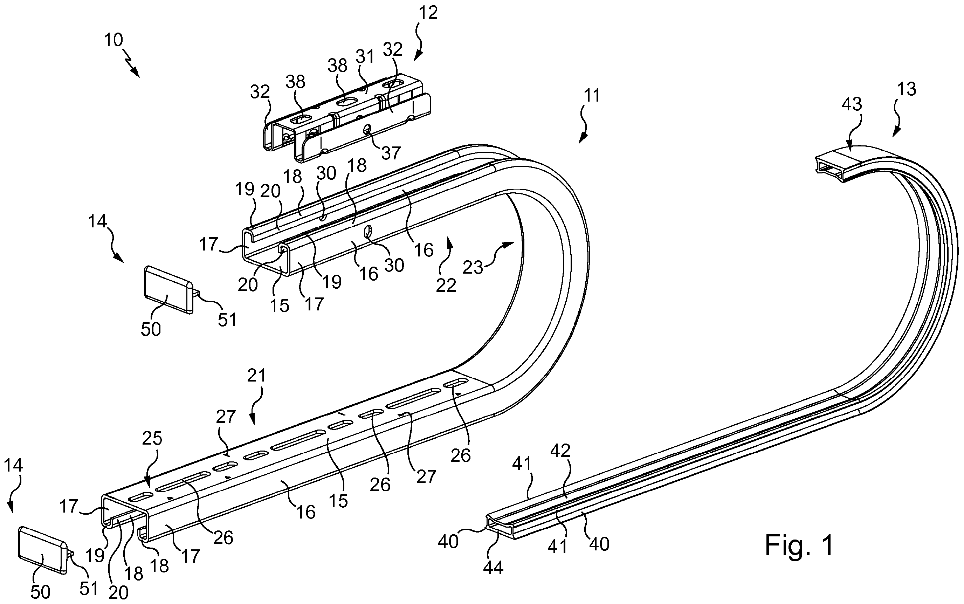

La console 10 illustrée sur les figures 1 à 5 comporte un élément métallique profilé 11, un accessoire de fixation 12, un bourrelet 13 et deux embouts 14.

L'élément métallique profilé 11 comporte un fond 15 et deux ailes latérales 16 chacune raccordée par un côté longitudinal à un côté longitudinal respectif du fond 15.

Les ailes latérales 16 sont en regard l'une de l'autre et ont chacune une conformation qui est l'image miroir de la conformation de l'autre aile latérale 16.

Chaque aile latérale 16 comporte une paroi latérale 17 et un retour 18 à section en L comportant un rebord 19 et un bord tombé 20.

Pour chaque aile latérale 16 :
- la paroi latérale 17 s'étend entre le fond 15 et le retour 18, et plus précisément entre le fond 15 et le rebord 19 du retour 18 ;
- chaque rebord 19 est en regard du fond 15 et s'étend entre la paroi latérale 17 et le bord tombé 20 ; et
- chaque bord tombé 20 est, du côté externe, en regard de la paroi latérale 17 et, du côté interne, en regard du bord tombé 20 de l'autre aile latérale 16.

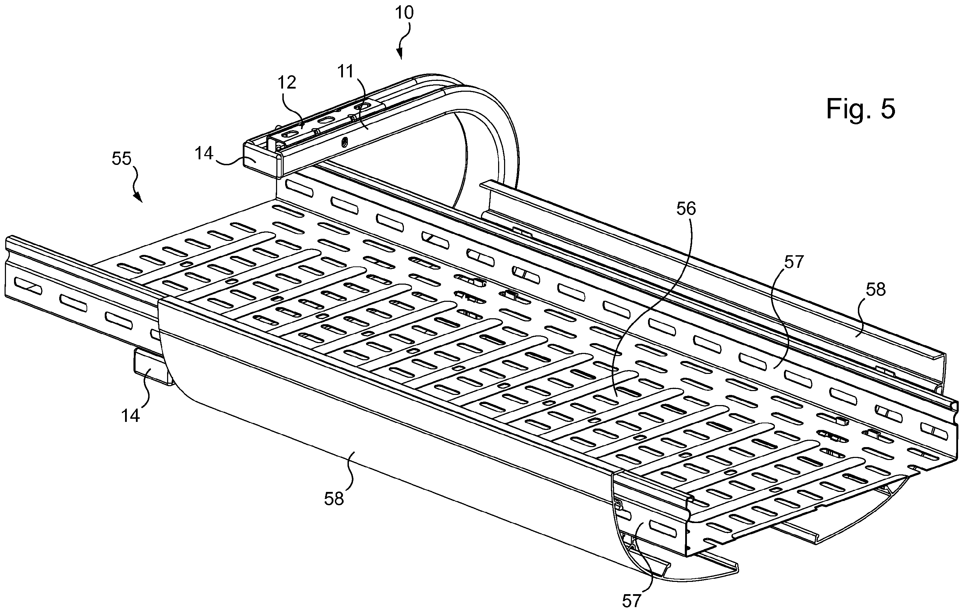

L'élément métallique profilé 11 comporte :
- une portion 21 configurée pour former un support horizontal à un objet tel qu'un chemin de câbles, ainsi que montré sur la figure 5 ;
- une portion 22 configurée pour être fixée sur une structure ayant une surface horizontale en surplomb de l'espace où doit se trouver la console, par exemple un plafond ; et
- un coude 23 situé entre la portion 21 et la portion 22, le fond 15 étant, au niveau du coude 23, convexe du côté des ailes latérales 16, et donc concave du côté du côté opposé aux ailes latérales 16.

Ici, le coude 23 est courbé suivant un arc de cercle sur environ 180°, avec le centre de courbure qui est situé du côté opposé aux ailes latérales 16.

La portion 21 est prévue pour recevoir l'objet tel qu'un chemin de câble sur la face externe 25 du fond 15, c'est-à-dire sur la face du fond 15 qui est du côté opposé aux ailes latérales 16.

Pour permettre de fixer l'objet tel qu'un chemin de câbles à la console 10, le fond 15 présente, au niveau de la portion 21, une série d'ouvertures 26.

Ici, les ouvertures 26 sont allongées et alignées suivant la direction longitudinale de l'élément métallique 11.

Ici, certaines des ouvertures 26 sont courtes et d'autres ouvertures 26 sont longues.

Pour aider au positionnement de l'objet tel qu'un chemin de câbles, la face externe 25 du fond 15 présente, au niveau de la portion 21, des repères 27.

Dans chacune des ailes latérales 16 de la portion 22 de l'élément métallique profilé 11, est ménagé un trou 30 de passage d'une vis de fixation entre l'élément métallique profilé 11 et l'accessoire de fixation 12.

Plus précisément, c'est dans la paroi latérale 17 de chaque aile 16 qu'est ménagé un trou 30.

L'accessoire de fixation 12 est un élément profilé, relativement court, qui est ici métallique.

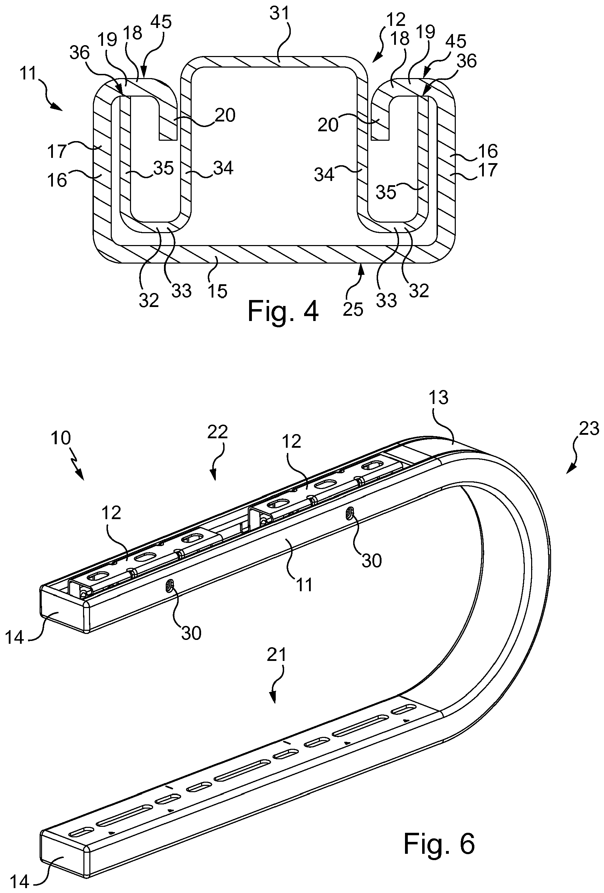

Comme on le voit bien sur les figures 1 et 4, l'accessoire de fixation 12 comporte une âme centrale 31 et deux gouttières latérales 32 chacune raccordée par un côté longitudinal à un côté longitudinal respectif de l'âme centrale 31.

Les gouttières latérales 32 sont en regard l'une de l'autre et ont chacune une conformation qui est l'image miroir de la conformation de l'autre gouttière latérale 32.

Chaque gouttière latérale 32 comporte un fond 33 et deux parois latérales, respectivement une paroi latérale interne 34 et une paroi latérale externe 35.

Pour chaque gouttière latérale 32 :
- la paroi latérale interne 34 et la paroi latérale externe 35 sont raccordées chacune par un côté longitudinal à un côté longitudinal respectif du fond 33 ;
- la paroi latérale interne 34 s'étend entre le fond 33 et l'âme centrale 31 ;
- la paroi latérale externe 35 s'étend entre le fond 33 et un bord libre 36 ; et
- la paroi latérale interne 34 est plus longue que la paroi latérale externe 35, de sorte que le bord libre 36 est en retrait par rapport à l'âme centrale 31.

La largeur de l'accessoire de fixation 12, c'est-à-dire l'écart entre les faces externes des parois latérales externes 35, est plus petite que la largeur de l'espace interne de l'élément métallique profilé 11, c'est-à-dire l'écart entre les faces internes des parois latérales 17.

La largeur de la portion centrale de l'accessoire de fixation 12 formée par l'âme centrale 31 et par les paroi latérales internes 34, c'est-à-dire l'écart entre les faces externes des parois latérales internes 34, est plus petite que la largeur de l'espace existant entre les retours 18, c'est-à-dire l'écart entre les faces internes des bords tombés 20.

La hauteur de chaque portion latérale de l'accessoire de fixation 12 formée par la paroi latérale externe 35 et le fond 33 d'une gouttière latérale 32, c'est-à-dire l'écart entre le bord libre 36 et la face externe du fond 33, est plus petite que la hauteur de l'espace délimité de chaque côté de l'élément métallique profilé 11 par le fond 15 et l'une des ailes latérales 16, c'est-à-dire l'écart entre la face interne du rebord 19 et la face interne du fond 15.

Ainsi, la portion centrale (âme centrale 31 et parois latérales internes 34) de l'accessoire de fixation 12 peut se loger entre les retours 18 tandis que chaque portion latérale (fond 33 et paroi latérale externe 35) de l'accessoire de fixation 12 peut se loger entre le fond 15 et l'un des retours 18, avec l'âme centrale 31 qui est en débord de l'élément métallique profilé 11, et plus précisément en débord des rebords 19.

Dans chacune des parois latérales externes 35, est ménagé un trou 37 (figure 1).

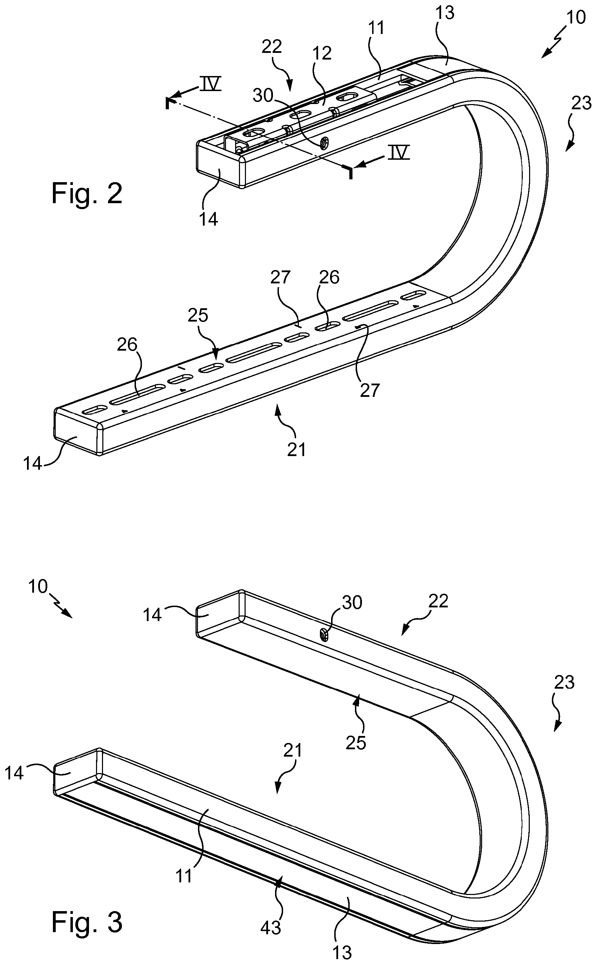

L'accessoire de fixation 12 et l'élément métallique profilé 11 peuvent coulisser l'un par rapport à l'autre lorsque l'accessoire de fixation 12 est inséré dans la portion 22, comme montré sur les figures 2 et 4.

L'accessoire de fixation 12 peut être inséré dans la portion 22 par l'extrémité libre de l'élément métallique profilé 11 qui est du côté opposé au coude 23. Le coulissement entre l'accessoire de fixation 12 et l'élément profilé métallique 11 peut se faire jusqu'à ce que, de chaque côté, le trou 37 et le trou 30 soient alignés. L'accessoire de fixation 12 et l'élément métallique profilé 11 peuvent alors être assujettis l'un à l'autre par un système vis-écrou, d'un seul côté ou des deux côtés, la tige de la vis passant au travers du trou 30 et du trou 37.

En variante, la fixation entre l'élément métallique profilé 11 et l'accessoire de fixation 12 se fait différemment, par exemple par clipsage ou par une patte à rabattre.

On observera que le fait que l'âme centrale 31 de l'accessoire de fixation 12 soit en débord de l'élément métallique profilé 11, et plus précisément en débord des rebords 19, ainsi qu'expliqué ci-dessus, permet de laisser un jeu entre la structure telle qu'un plafond et l'élément métallique profilé 11. Grâce à ce jeu, le coulissement de l'élément métallique profilé 11 est possible vis-à-vis de la structure telle qu'un plafond à laquelle est assujetti l'accessoire de fixation 12.

Dans l'âme centrale 31 sont ménagées des ouvertures 38, qui sont ici allongées et alignées suivant la direction longitudinale de l'accessoire de fixation 12.

Les ouvertures 38 sont prévues pour assujettir l'accessoire de fixation 12 à la structure telle qu'un plafond, grâce à des vis engagées dans les ouvertures 38 et en prise sur la structure, avec la face externe de l'âme centrale 31 (face du côté opposé aux gouttières latérales 32) qui est contre la structure.

On observera que la tête des vis ou autres organes de fixation servant à assujettir l'accessoire 12 à la structure telle qu'un plafond, se trouve contre la face interne de l'âme centrale 31, c'est-à-dire la face qui est du côté des gouttières latérales 32.

Par conséquent, la tête des vis ou analogues n'est pas visible puisqu'elle se trouve dans un espace entièrement entouré par l'élément métallique profilé 11.

C'est seulement la tête de la vis ou des vis ou autres organes de fixation entre l'élément métallique profilé 11 et l'accessoire de fixation 12 qui est visible, ce qui est particulièrement discret, et donc favorable à l'aspect visuel.

Pour fixer l'élément métallique profilé 11 à la structure telle qu'un plafond, on assujettit l'accessoire de fixation 12 à cette structure comme il vient d'être indiqué, on engage l'élément métallique profilé 11 sur l'accessoire de fixation 12 en insérant l'accessoire de fixation 12 dans la portion 22 par l'extrémité libre de l'élément métallique profilé 11 qui est du côté opposé au coude 23, on fait coulisser l'élément profilé métallique 11 jusqu'à ce que, de chaque côté, le trou 37 de l'accessoire de fixation 12 et le trou 30 de la portion 22 soient alignés et l'on met en place un organe de fixation sur un côté ou sur les deux côtés, ainsi qu'expliqué ci-dessus.

On observera que si l'élément métallique profilé 11 est utilisé tel quel (sans le bourrelet 13 et sans les embouts 14), les ouvertures 26 de la portion 21 sont peu visibles pour un observateur situé sous l'élément métallique profilé 11, par exemple un observateur situé sur le sol en regard du plafond sur lequel est fixé l'élément métallique profilé 11.

En effet, le fond 15 de la portion 21 est du côté de la structure telle qu'un plafond et non du côté de l'observateur. De plus, le fond 15 est masqué partiellement par les retours 18.

De même, lorsque l'objet tel qu'un chemin de câbles est placé sur la portion 21, les organes de fixation en prise sur le pourtour des ouvertures 26 sont partiellement masquées par les retours 18.

Pour masquer totalement les ouvertures 26 et les organes de fixation de l'objet tel qu'un chemin de câbles, et plus généralement pour donner un aspect fini, l'élément métallique profilé 11 est équipé d'un bourrelet 13 servant à fermer l'espace existant entre les retours 18.

Le bourrelet 13 est ici un élément tubulaire extrudé en matière plastique souple et élastique à section globalement rectangulaire dont le contour correspond à celui de l'espace existant entre les retours 18 de l'élément métallique profilé 11.

Dans chaque coin, le bourrelet 13 comporte une nervure pour se prendre de part et d'autre d'un bord tombé 20, à savoir deux nervures 40 chacune pour se prendre sur la zone de jonction entre le rebord 19 et le bord tombé 20 d'un des retours 18 et deux nervures 41 chacune pour se prendre sur la tranche située à l'extrémité libre d'un des bords tombés 20.

Grâce à la souplesse et à l'élasticité de la matière dans laquelle il est fait, le bourrelet 13 peut se déformer pour se glisser entre les retours 18, et plus précisément pour que les nervures 41 puissent se rapprocher l'une de l'autre pour franchir les bords tombés 20 puis s'écarter l'une de l'autre lorsque les bords tombés 20 sont franchis.

La capacité des nervures 41 à se rapprocher puis à s'écarter l'une de l'autre est fournie notamment par la capacité de déformation élastique de la paroi 42 située entre les nervures 41.

Lorsque le bourrelet 13 est en place sur l'élément métallique profilé 11, la surface externe 43 de la paroi 44 située entre les nervures 40 est à fleur de la surface externe 45 des rebords 19 (figure 3).

Ainsi qu'on le voit bien sur les figures 1 et 2, le bourrelet 13 a une longueur plus petite que celle de l'élément métallique profilé 11.

En effet, il n'est point besoin d'obturer l'espace existant entre les retours 18 dans la portion 22 puisqu'en position d'utilisation cet espace n'est pas visible (il est tourné vers la structure telle qu'un plafond) et puisque l'espace entre les retours 18 doit être laissé libre pour pouvoir loger l'accessoire de fixation 12.

En variante, le bourrelet 13 a, au moins dans la portion 21 de l'élément métallique profilé 11, une fonction lumineuse, en étant par exemple munie d'ampoules LED.

Pour améliorer encore l'aspect, l'élément métallique profilé 11 est équipé d'un embout à l'extrémité libre de la portion 21 et/ou à l'extrémité libre de la portion 22, ici à chaque extrémité libre.

Chaque embout 14 comporte une plaquette 50 et une languette 51 qui s'étend à partir de la plaquette 50.

La plaquette 50 a un contour rectangulaire correspondant au contour externe général, en section, de l'élément métallique profilé 11.

La languette 51 a une largeur légèrement plus grande que la largeur de l'espace interne de l'élément profilé 11, c'est-à-dire l'écart entre les faces internes des parois latérales 17.

Ainsi, la languette 51 de chaque embout 14 peut être insérée à force dans l'élément métallique profilé 11 pour que la plaquette 50 obture l'une des extrémités de l'élément métallique profilé 11.

A l'état assemblé et fixé à la structure telle qu'un plafond, ainsi qu'on le voit sur les figures 2, 3 et 5, la console 10 est discrète et présente un aspect bien fini.

La figure 5 montre un chemin de câbles 55 supporté par la console 10.

Ici, le chemin de câbles 55 est un chemin de câbles conventionnel en tôle métallique perforée présentant un fond 56 et des ailes latérales 57 chacune raccordée par un côté longitudinal à un côté longitudinal respectif du fond 56.

Le chemin de câbles 55 repose par son fond 56 sur la portion 22 de l'élément métallique profilé 11.

Le chemin de câbles 55 est assujetti à la console 10 par des organes de fixation (non représentés) en prise sur le pourtour d'une ouverture du fond du chemin de câbles 55 et d'une ouverture 26 de la portion 21 de l'élément métallique profilé 11.

Ici, de chaque côté gauche et droite, un bandeau coudé 58 est fixé sur le chemin de câbles 55 et l'enveloppe extérieurement au droit d'une aile latérale 57 et d'une partie du fond 56.

Les bandeaux coudés 58 forment un habillage qui enveloppe extérieurement le chemin de câbles 55 de chaque côté gauche et droit et partiellement du côté bas.

Grâce à la discrétion de la console 10 et à l'habillage formé par les bandeaux coudés 58, il n'est point besoin de cacher la console 10 et le chemin de câbles 55 derrière un faux plafond.

On notera que l'ensemble de cheminement de câbles formé par le chemin de câbles 55 et par les bandeaux coudés 58 fixés sur le chemin de câbles 55 fait l'objet d'une demande de brevet français des demanderesses.

La figure 6 montre une variante de la console 10 dans laquelle la portion 22 a une longueur semblable à la longueur de la portion 21 (au lieu d'être plus courte), de sorte que la portion 22 peut recevoir deux accessoires de fixation 12.

La console 10 illustrée sur la figure 6 convient particulièrement bien pour être suspendue, chaque accessoire de fixation 12 étant suspendu individuellement, par exemple par un filin. La présence de deux accessoires de fixation 12 permet un meilleur équilibrage.

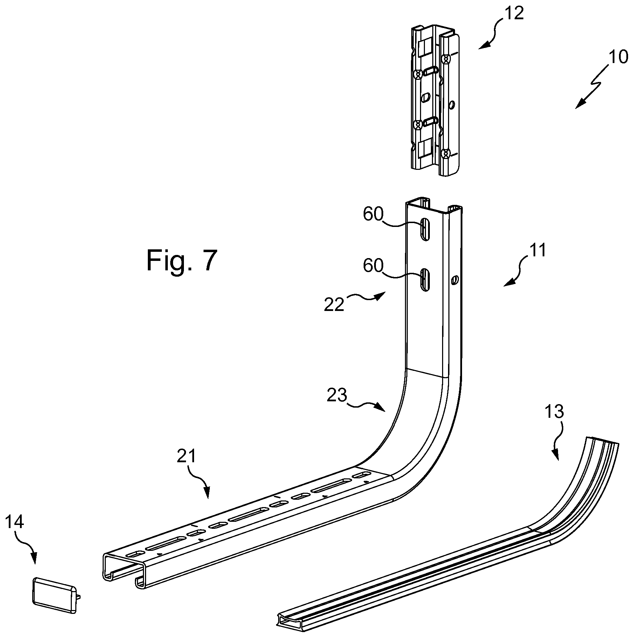

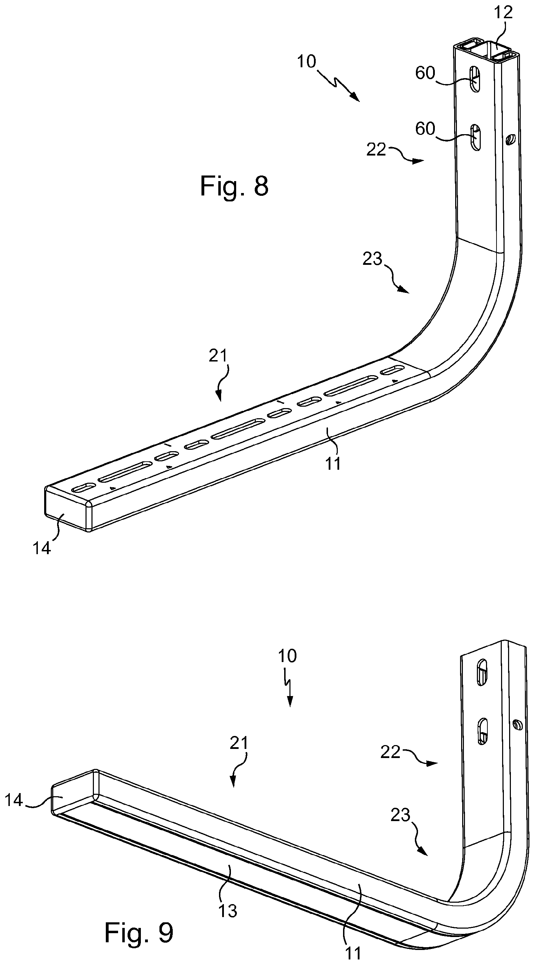

Dans la variante de la console 10 illustrée sur les figures 7 à 10, le coude 23 est courbé suivant un arc de cercle sur environ 90° (et non 180°) de sorte que la portion 22 est orientée transversalement (et non parallèlement) à la portion 21.

Dans cette variante, la portion 22 est configurée pour être fixée sur une structure telle qu'un mur (et non un plafond).

L'extrémité libre de la portion 22, qui n'est pas visible du sol, n'est ici pas équipée d'un embout 14.

Ici, la portion 22 est relativement courte, afin que la portion 21 puisse être relativement proche du plafond.

Lorsque l'accessoire de fixation 12 est positionné dans la portion 22, son extrémité est située au niveau de l'extrémité libre de la portion 22.

Ici, au niveau de la portion 22, le fond 15 de l'élément métallique profilé 11 présente deux ouvertures 60 permettant, si on le désire, de fixer la console 10 directement avec des vis ou autres organes de fixation, plutôt que par l'intermédiaire de l'accessoire de fixation 12.

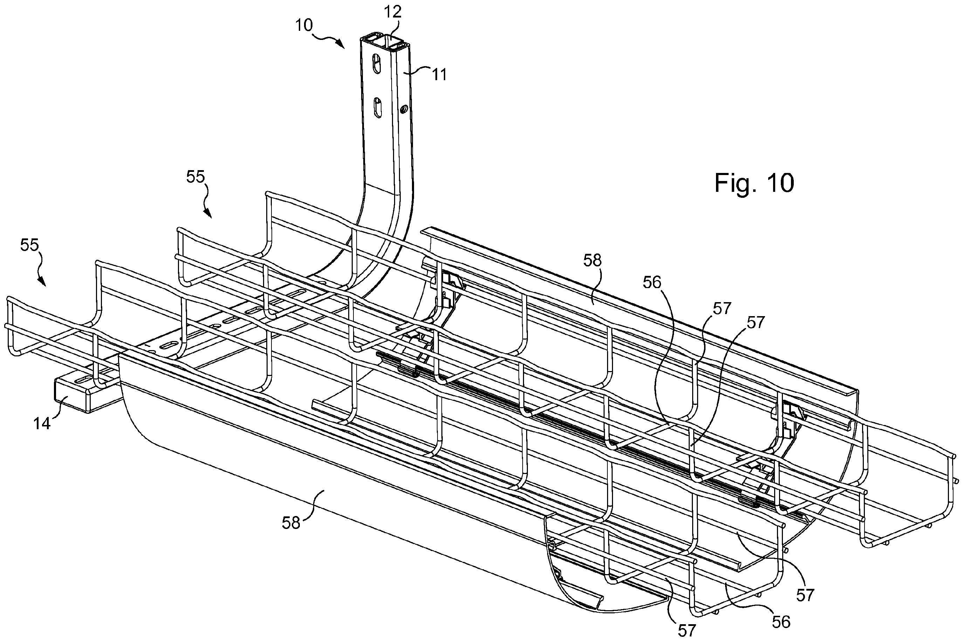

La figure 10 montre deux chemins de câbles 55 supportés par la console 10 illustrée sur les figures 7 à 9, ces deux chemins de câbles étant disposés côte-à-côte.

Ici, les chemins de câbles 55 sont des chemins de câbles conventionnels en treillis de fils métalliques présentant chacun un fond 56 et des ailes latérales 57 chacune raccordée par un côté longitudinal à un côté longitudinal respectif du fond 56.

Chacun des chemins de câbles 55 repose par son fond 56 sur la portion 21 de l'élément métallique profilé 11. Chacun des chemins de câbles 55 est assujetti à la console 10 par des organes de fixation (non représentés) en prise sur l'un des fils du chemin de câbles 55 et sur le voisinage d'une ouverture 26 de la portion 21 de l'élément métallique profilé 11. Ici, sur l'ensemble formé par les deux chemins de câbles 55 disposés côte-à-côte, de chaque côté gauche et droite, un bandeau coudé 58 est fixé sur un chemin de câbles 55 de sorte que l'ensemble de cheminement est enveloppé extérieurement de chaque côté gauche et droite et partiellement du côté bas.

Dans chacun des exemples illustrés, la console 10 comporte, en outre de l'élément métallique profilé 11, un accessoire de fixation 12, un bourrelet 13 et au moins un embout 14. En variante, la console 10 ne comporte pas l'accessoire de fixation 12, le bourrelet 13 et/ou l'embout 14 ; avec par exemple la console 10 qui est formée uniquement par l'élément métallique profilé 11.

Dans les exemples illustrés de la console 10, le coude 23 est conformé en arc de cercle.

Dans des variantes non illustrées, le coude 23 est conformé différemment, par exemple avec deux arcs de cercle et un tronçon rectiligne entre les deux arcs de cercle ; et/ou avec un angle de courbure différent, par exemple 45° pour se prendre sur un mur incliné.

De nombreuses autres variantes sont possibles en fonction des circonstances, et l'on rappelle à cet égard que l'invention ne se limite pas aux exemples décrits et représentés.

## Revendications

1. Console pour fournir un support horizontal à un objet tel qu'un chemin de câbles (55), comportant un élément métallique profilé (11) présentant un fond (15) et deux ailes latérales (16) chacune raccordée par un côté longitudinal à un côté longitudinal respectif du fond (15), les ailes latérales (16) étant en regard l'une de l'autre, chaque aile latérale (16) comportant une paroi latérale (17) et un retour (18) présentant un rebord (19), avec la paroi latérale (17) qui s'étend entre le fond (15) et le rebord (19), lequel élément métallique profilé (11) comporte une première portion (21) configurée pour former ledit support horizontal, une deuxième portion (22) configurée pour être fixée sur une structure telle qu'un mur ou un plafond, et un coude (23) situé entre la première portion (21) et la deuxième portion (22), le fond (15) de la première portion présentant une série d'ouvertures (26) ; **caractérisée en ce que** dans ledit élément métallique profilé (11), le rebord (19) de chaque aile latérale (16) est en regard du fond (15) du côté interne de la paroi latérale (17) tandis qu'au niveau dudit coude (23), ledit fond (15) est convexe du côté des ailes latérales (16) ; et **en ce qu'**elle comporte, en outre dudit élément métallique profilé (11), un accessoire de fixation (12) configuré pour être inséré dans ladite deuxième portion (22) de l'élément métallique profilé (11), lequel accessoire de fixation (12) comporte une portion centrale (31, 34) configurée pour se loger entre lesdits retours (18), et deux portions latérales (33, 35) chacune configurée pour se loger entre ledit fond (15) et l'un desdits retour (18), avec ladite portion centrale (31, 34) qui comporte une ouverture (38) pour un organe de fixation sur ledit support tel qu'un mur ou un plafond.

2. Console selon la revendication 1, **caractérisée en ce qu'**au moins une dite portion latérale (33, 35) dudit accessoire de fixation (12) comporte un trou (37) pour un organe de fixation entre ledit accessoire de fixation (12) et ladite deuxième portion (22) de l'élément métallique profilé (11).

3. Console selon l'une quelconque des revendications 1 ou 2, **caractérisée en ce qu'**elle comporte deux dits accessoires de fixation (12).

4. Console selon l'une quelconque des revendications 1 à 3, **caractérisée en ce que** ladite deuxième portion (22) de l'élément métallique profilé (11) et chaque dit accessoire de fixation (12) sont configurés pour qu'une âme centrale (31) de chaque dit accessoire de fixation (12) soit en débord dudit élément métallique profilé (11) lorsque ledit accessoire de fixation (12) est inséré dans ladite deuxième portion (22).

5. Console selon l'une quelconque des revendications 1 à 4, **caractérisée en ce que** chaque dit accessoire de fixation (12) comporte une âme centrale (31) et deux gouttières latérales (32) chacune raccordée par un côté longitudinal à un côté longitudinal respectif de l'âme centrale (31).

6. Console selon l'une quelconque des revendications 1 à 5, **caractérisée en ce qu'**elle comporte, en outre dudit élément métallique profilé (11), un bourrelet (13) pour fermer l'espace existant entre lesdits retours (18).

7. Console selon la revendication 6, **caractérisée en ce que** ledit bourrelet (13) comporte de chaque côté une première nervure (40) pour se prendre sur une zone de jonction entre ledit rebord (19) et un bord tombé (20) dudit retour (18) et une deuxième nervure (41) pour se prendre sur la tranche située à une extrémité libre dudit bord tombé (20).

8. Console selon la revendication 7, **caractérisée en ce que**, lorsque ledit bourrelet (13) est en place sur ledit élément métallique profilé (11), une paroi (44) dudit bourrelet (13) situé entre lesdites premières nervures (40) présente une surface externe (43) à fleur de la surface externe (45) desdits rebords (19).

9. Console selon l'une quelconque des revendications 1 à 5, **caractérisée en ce qu'**elle comporte, en outre dudit élément métallique profilé (11) et dudit accessoire de fixation (12), un bourrelet (13) pour fermer l'espace existant entre lesdits retours (18), engagé dans ladite première portion (21) et dans ledit coude (23).

10. Console l'une quelconque des revendications 1 à 9, **caractérisée en ce qu'**elle comporte, en outre dudit élément métallique profilé (11), un embout (14) engagé sur au moins une extrémité libre dudit élément métallique profilé (11).

11. Console selon la revendication 10, **caractérisée en ce que** ladite extrémité libre est à l'extrémité de ladite première portion (21) de l'élément métallique profilé (11) qui est du côté opposé audit coude (23).

## Patentansprüche

1. Konsole zum Bereitstellen eines waagerechten Trägers für einen Gegenstand wie zum Beispiel eine Kabelwanne (55), ein Metallprofilelement (11) mit einem Boden (15) und zwei Seitenflügeln (16) umfassend, die jeweils durch eine Längsseite mit einer entsprechenden Längsseite des Bodens (15) verbunden sind, wobei die Seitenflügel (16) einander gegenüberliegen, wobei jeder Seitenflügel (16) eine Seitenwand (17) und eine Umbiegung (18) mit einem Rand (19) aufweist, wobei sich die Seitenwand (17) zwischen dem Boden (15) und dem Rand (19) erstreckt, wobei das Metallprofilelement (11) ein zum Bilden des waagerechten Trägers ausgebildetes erstes Teil (21), ein zum Befestigen an einer Struktur wie einer Wand oder Decke ausgebildetes zweites Teil (22) und eine zwischen dem ersten Teil (21) und dem zweiten Teil (22) angeordnete Biegung (23) umfasst, wobei der Boden (15) des ersten Teils eine Reihe von Öffnungen (26) aufweist;
**dadurch gekennzeichnet, dass** in dem Metallprofilelement (11) der Rand (19) eines jeden Seitenflügels (16) an der Innenseite der Seitenwand (17) dem Boden gegenüberliegt, während der Boden (15) in Höhe der Biegung (23) auf der Seite der Seitenflügel (16) konvex ist; und dass sie außer dem Metallprofilelement (11) ein Befestigungszubehör (12) umfasst, das dazu ausgebildet ist, in das zweite Teil (22) des Metallprofilelements (11) eingesetzt zu werden, wobei das Befestigungszubehör (12) ein zur Lagerung zwischen den Umbiegungen (18) ausgebildetes Mittelteil (31, 34) und zwei Seitenteile (33, 35) umfasst, die jeweils dazu ausgebildet sind, zwischen dem Boden (15) und einer der Umbiegungen (18) zu lagern, wobei das Mittelteil (31, 34) eine Öffnung (38) für ein Organ zur Befestigung des Trägers an einer Struktur wie einer Wand oder einer Decke aufweist.

2. Konsole nach Anspruch 1,
**dadurch gekennzeichnet, dass** wenigstens eines der Seitenteile (33, 35) des Befestigungszubehörs (12) ein Loch (37) für ein Organ zur Befestigung des Befestigungszubehörs (12) an dem zweiten Teil (22) des Metallprofilelements (11) aufweist.

3. Konsole nach einem der Ansprüche 1 oder 2,
**dadurch gekennzeichnet, dass** sie zwei Befestigungszubehöre (12) umfasst.

4. Konsole nach einem der Ansprüche 1 bis 3,
**dadurch gekennzeichnet, dass** das zweite Teil (22) des Metallprofilelements (11) und jedes Befestigungszubehör (12) dazu ausgebildet sind, dass ein Mittelsteg (31) eines jeden Befestigungszubehörs (12) über das Metallprofilelement (11) übersteht, wenn das Befestigungszubehör (12) in das zweite Teil (22) eingesetzt ist.

5. Konsole nach einem der Ansprüche 1 bis 4,
**dadurch gekennzeichnet, dass** jedes Befestigungszubehör (12) einen Mittelsteg (31) und zwei seitliche Rinnen (32) umfasst, die jeweils durch eine Längsseite mit einer entsprechenden Längsseite des Mittelstegs (31) verbunden sind.

6. Konsole nach einem der Ansprüche 1 bis 5,
**dadurch gekennzeichnet, dass** sie außer dem Metallprofilelement (11) eine Schiene (13) zum Schließen des zwischen den Umbiegungen (18) bestehenden Zwischenraums umfasst.

7. Konsole nach Anspruch 6,
**dadurch gekennzeichnet, dass** die Schiene (13) auf jeder Seite eine erste Rippe (40) umfasst, um sich an einem Übergangsbereich zwischen dem Rand (19) und einem nach unten gebogenen Rand (20) der Umbiegung (18) einzuhängen, sowie eine zweite Rippe (41), um sich an der an einem freien Ende des nach unten gebogenen Rands (20) gelegenen Kante einzuhängen.

8. Konsole nach Anspruch 7,
**dadurch gekennzeichnet, dass** bei am Metallprofilelement (11) angebrachter Schiene (13) eine zwischen den ersten Rippen (40) gelegene Wand (44) der Schiene (13) eine mit der Außenfläche (45) der Ränder (19) bündige Außenfläche (43) aufweist.

9. Konsole nach einem der Ansprüche 1 bis 5,
**dadurch gekennzeichnet, dass** sie außer dem Metallprofilelement (11) und dem Befestigungszubehör (12) eine Schiene (13) zum Schließen des zwischen den Umbiegungen (18) bestehenden Zwischenraums umfasst, die in das erste Teil (21) und die Biegung (23) eingesetzt ist.

10. Konsole nach einem der Ansprüche 1 bis 9,
**dadurch gekennzeichnet, dass** sie außer dem Metallprofilelement (11) ein Endstück (14) umfasst, das an wenigstens einem freien Ende des Metallprofilelements (11) eingesetzt ist.

11. Konsole nach Anspruch 10,
**dadurch gekennzeichnet, dass** das freie Ende sich an dem Ende des ersten Teils (21) des Metallprofilelements (11) befindet, das der Biegung (23) entgegengesetzt ist.

## Claims

1. A bracket for providing a horizontal support for an object such as a cable tray (55), comprising a metal member of profiled cross-section (11) having a base (15) and two side rails (16) each connected by a longitudinal side to a respective longitudinal side of the base (15), the side rails (16) facing each other, each side rail (16) comprising a side wall (17) and a flange (18) having a rim (19), the side wall (17) extending between the base (15) and the rim (19), which metal member of profiled cross-section (11) comprises a first portion (21) configured to form said horizontal support, a second portion (22) configured to be fastened to a structure such as a wall or a ceiling, and a bend (23) situated between the first portion (21) and the second portion (22), the base (15) of the first portion having a series of openings (26); **characterized in that** in said metal member of profiled cross-section (11), the rim (19) of each side rail (16) is opposite the base (15) inward of the side wall (17) while at the location of said bend (23), said base (15) is convex towards the side walls (16); and **in that** it comprises, in addition to said metal member of profiled cross-section (11), a fastening accessory (12) configured to be inserted into said second portion (22) of the metal member of profiled cross-section (11), which fastening accessory (12) comprises a central portion (31, 34) configured to be accommodated between said flanges (18), and two side portions (33, 35) each configured to be accommodated between said base (15) and one of said flanges (18), said central portion (31, 34) comprising an opening (38) for a fastening member for fastening to said support such as a wall or a ceiling.

2. A bracket according to claim 1, **characterized in that** at least one said side portion (33, 35) of said fastening accessory (12) comprises a hole (37) for a fastening member for fastening between said fastening accessory (12) and said second portion (22) of the metal member of profiled cross-section (11).

3. A bracket according to any one of claims 1 or 2, **characterized in that** it comprises two said fastening accessories (12).

4. A bracket according to any one of claims 1 to 3, **characterized in that** said second portion (22) of the metal member of profiled cross-section (11) and each said fastening accessory (12) are configured in order for a central web (31) of each said fastening accessory (12) to be proud relative to said metal member of profiled cross-section (11) when said fastening accessory (12) is inserted into said second portion (22).

5. A bracket according to any one of claims 1 to 4, **characterized in that** each said fastening accessory (12) comprises a central web (31) and two side channels (32) each connected by a longitudinal side to a respective longitudinal side of the central web (31).

6. A bracket according to any one of claims 1 to 5, **characterized in that** it comprises, in addition to said metal member of profiled cross-section (11), a closing strip (13) to close the space between said flanges (18).

7. A bracket according to claim 6, **characterized in that** said closing strip (13) comprises on each side a first rib (40) for engaging on a junction zone between said rim (19) and a lipped edge (20) of said flange (18) and a second rib (41) for engaging on the brink situated at a free end of said lipped edge (20).

8. A bracket according to claim 7, **characterized in that**, when said closing strip (13) is in place on said metal member of profiled cross-section (11), a wall (44) of said closing strip (13) situated between said first ribs (40) has an outside surface (43) flush with the outside surface (45) of said rims (19).

9. A bracket according to any one of claims 1 to 5, **characterized in that** it comprises, in addition to said metal member of profiled cross-section (11) and said fastening accessory (12), a closing strip (13) to close the space between said flanges (18), which is engaged in said first portion (21) and in said bend (23).

10. A bracket according to any one of claims 1 to 9, **characterized in that** it comprises, in addition to said metal member of profiled cross-section (11), an end piece (14) engaged on at least one free end of said metal member of profiled cross-section (11).

11. A bracket according to claim 10, **characterized in that** said free end is at the end of said first portion (21) of the metal member of profiled cross-section (11) which is away from said bend (23).
